# EUROPÄISCHE PATENTANMELDUNG

(11) **EP 1 571 413 A1**
(43) Veröffentlichungstag der Anmeldung: **07.09.2005**
(21) Anmeldenummer: 05004275.3
(22) Anmeldetag: 28.02.2005
(51) Int. Cl.: G01B 11/16, G01B 11/30

(54) **Messgerät zur Bestimmung der Geradheit von Wellen oder Wellentunneln**

(30) Priorität: 05.03.2004 DE 102004011404
(71) Anmelder: Prüftechnik Dieter Busch AG, 85737 Ismaning (DE)
(72) Erfinder: Lysen, Heinrich, 85748 Garching (DE)

(57) **Zusammenfassung**

Die Vorrichtung zur Bestimmung der abschnittsweisen Geradheit von Wellen oder Wellentunneln kommt bevorzugt im größeren Wasserfahrzeugen zum Einsatz, kann aber auch zur Vermessung von Öl-Pipelines verwendet werden.

Ein erster und ein zweiter Adapter auf Basis eines mechanischen Prismas enthalten je eine optische Sende- und Empfangsvorrichtung. Die Empfangsvorrichtungen sind in der Lage, Einfallsort und -richtung der auf sie auftreffenden Licht- oder Laserstrahlen zu erfassen. Auf diese Weise gelingt es, Parallel- und Winkelversatz von Wellen, Wellentunneln oder Pipelines abschnittsweise durch je einen einzigen Meßvorgang quantitativ zu bestimmen.

Die Adapter sind bevorzugt von identischer Gestalt und Wirkungsweise.

## Beschreibung

Die Erfindung betrifft ein Meßgerät und ein zugehöriges Meßverfahren zur Bestimmung der Geradheit von Wellen oder Wellentunneln, insbesondere solcher in motorisierten Wasserfahrzeugen. Die Erfindung kann aber auch dazu benutzt werden, die exakte Ausrichtung von Maschinenwellen oder Spindeln an Werkzeugmaschinen relativ zu einer Achse einer anderen Welle oder Spindel zu bestimmen. Auch Oberflächen von Werkzeugmaschinen können mit der erfmdungsgemäßen Vorrichtung vermessen werden. Weiterhin kann die Erfindung dazu benutzt werden, die Geradheit und die Ausrichtung von Pipelines oder anderer rohrartiger Gegenstände zu vermessen.

Ein Meßgerät und ein Verfahren zur Bestimmung der Ausrichtung eines Wellentunnels oder eines Rohres wird in der DE 19943502 dargestellt.
Dieses Meßverfahren setzt jedoch voraus, daß die Vermessung eines Wellentunnels bei entfernter Welle durchgeführt werden kann. Diese Voraussetzung ist bei eiligen Schiffsreparaturarbeiten oder auf See normalerweise nicht gegeben.

Es ist daher Aufgabe der Erfindung, eine Meßvorrichtung und ein Meßverfahren anzugeben, welche speziell zur Bestimmung der Geradheit von Wellen oder Wellentunnein von motorisierten Wasserfahrzeugen verwendet werden kann und insbesondere dafür geeignet ist, auf See verwendet zu werden. Weiterhin ist es eine Aufgabe der Erfindung, eine Meßeinrichtung zu schaffen, welche lediglich direktes Kontaktieren der zu vermessenden Wellen, eines Wellentunnels, Pipelines oder anderen rohrartigen Gegenständen erfordert. Auf ein Umschlagverfahren d.h. auf Messungen in mehreren Winkellagen auf der Peripherie der Welle soll also verzichtet werden können.

Diese Aufgabe wird gelöst durch eine Vorrichtung und ein Meßverfahren gemäß den Merkmalen der unabhängigen, untengenannten Patentansprüche.

Die Erfindung beruht auf einem laseroptischen Meßverfahren, weiches zwei unabhängig voneinander funktionierende Laser-Meßstrahlen samt zugehörigen Positionsdetektoren und nachgeschalteter Elektronik zum Nachweis der Laserstrahlen vorsieht.

Die Erfindung wird im folgenden anhand der Zeichnung erläutert.

### Es zeigt:

- Fig. 1: eine schematische Perspektivansicht einer gelagerten Welle mit aufgesetztem Meßgerät
- Fig. 2: geometrische Verhältnisse bei gekippt angesetzten Detektoren des Meßgerätes

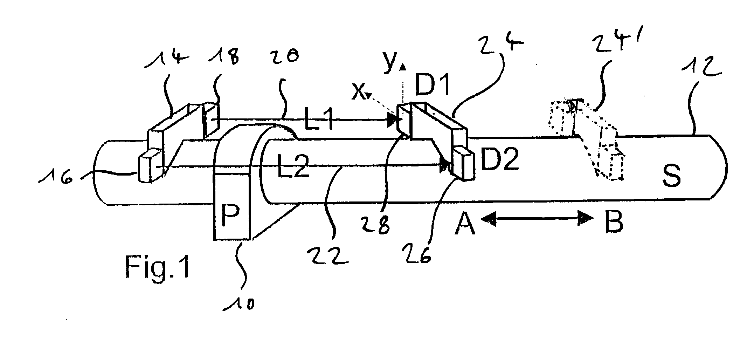

Die in Fig. 1 schematisch gezeigte Anordnung kann sich auf eine in einem Lagerbock P gelagerte Welle 10 bzw Schaft S beziehen, oder auf einen gehalterten Wellentunnel, oder auf eine gehalterte Rohrleitung oder ähnlich.

An einem mechanischen Prisma 14, welches geeignet ist, auf die zylindrische Oberfläche der Welle 10 aufgesetzt zu werden, sind Lichtsender 16 und 18 angebracht. Diese sind in der Lage, Lichtstrahlen L1 (Bezugsziffer 20) und L2 (Bezugsziffer 22) von im wesentlichen paralleler Ausrichtung in Richtung zugehöriger Detektoren D1 (Bezugsziffer 28) und D2 (Bezugsziffer 26) zu senden, gemäß bekannter Technologie zur Erzeugung einzelner Lichtstrahlen, speziell Laserlichtstrahlen fur Meßzwecke. Im Zusammenhang mit der hier gelösten Meßaufgabe ist es jedoch neu, zwei solcher Lichtsender simultan (ggf solcher, die in zeitlicher Sequenz wechselweise Licht emittieren) vorzusehen und zu betreiben, und zwar in einer solchen Anordnung und Art, daß auch die Lichtstrahlen L1 und L2 parallel zueinander ausgerichtet sind. Die Ausrichtung der Licht- oder Laserstrahlen 20, 22 ergibt sich aus der konstruktiven Kombination von mechanischem Prisma 14 und den dort befestigten Lichtsendern 16 und 18, naturgemäß auch aus der konstruktiven Anordnung der eigentlichen lichterzeugenden Vorrichtungen innerhalb der Gehäuse 16 und 18. Wie gezeigt, wird bei Aufsetzen des mechanischen Prismas 14 auf die Welle 10 eine automatische Ausrichtung der Lichtstrahlen 20 und 22 parallel zu einem dort (also lokal) definierten Achsabschnitt der Welle hervorgerufen. Bei einer idealen Welle würden die Lichtstrahlen 20, 22 also parallel zu deren Achse verlaufen. Für Meßbereiche von weniger als 100 Meter kann dabei die unvermeidliche Strahlaufweitung der Lichtstrahlen im wesentlichen unberücksichtigt bleiben.

In einem variabel vornehmbaren Abstand von der auf die Welle aufgesetzten Kombination aus mechn. Prisma 14 und Lichtsendern 16, 18 wird ein eine ähnlich konstruierte Kombination bestehend aus Prisma 24 und Detektoren 26 und 28 auf die Welle 10 aufgesetzt. Die Detektoren 26, 28 sind in der Lage, nicht nur den Einfallsort eines Lichtstrahles nach zwei Koordinaten (x und y) zu identifizieren, sondern können auch die Einfallsrichtung eines Lichtstrahles ermitteln, wie dies für einen einzelnen Detektor an sich bekannt ist. - Die zuletzt genannte Kombination ist so gefertigt, daß im Idealfall die beiden Lichtstrahlen 20, 22 genau zentrisch auf die lichtempfindlichen und positions-sensierenden Detektorelemente (nicht im Detail gezeigt) der Detektoren 26, 28 auftreffen. Sofern die Welle eine Krümmung oder sonstige Abweichungen von der ideal geraden Form aufweist, werden die beiden Lichtstrahlen mit einem Versatz, und gegebenenfalls mit schrägem Einfallswinkel, auf die Detektoren auftreffen.

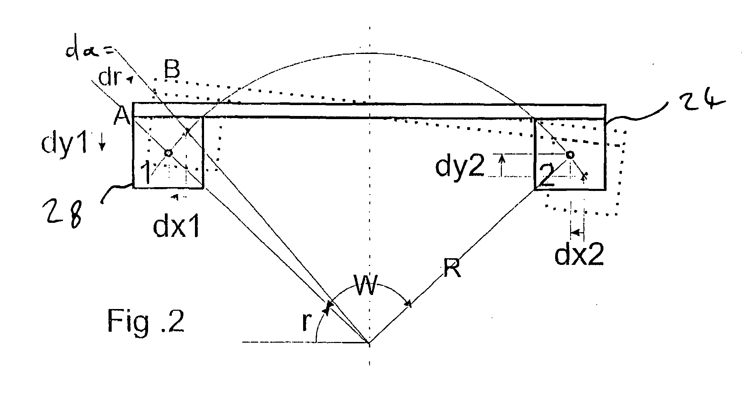

Auch bei Verkippung der Sensor-Kombination um eine ideale Welle, also in Richtung einer Wellen-Tangente, werden die beiden Lichtstrahlen ebenfalls nicht-zentrisch auf die Detektoren 26, 28 einfallen. Wie dies in Fig. 2 schematisch gezeigt ist, kann diese Situation mathematisch analysiert und ausgeglichen werden. Eine gleichzeitige Verlagerung der beiden zugehörigen Auftreffpunkte entlang eines Kreisbogens mit zulässigem Radius kann für das gesuchte Meßergebnis als unbeachtlich angesehen werden; für weitere Rechnungen ist ggf, lediglich der Verkippungswinkel dr = d alpha zu berücksichtigen.

Es ist ersichtlich, daß Abweichungen der Einfallswinkel der beiden Lichtstrahlen vom Sollwert 90° in jedem Falle auf ein verformtes Wellenstück hinweisen.

Mit der Anordnung nach Abb. 1 kann also für einzelne lokale Abschnitte der Wellen mit jeweils einer einzigen Messung überprüft werden, ob diese Abschnitte völlig koaxial zueinander liegende Achsen aufweisen oder nicht. Die Messung wird also zweckmäßig abschnittsweise wiederholt, d h. es wird die Sensor-Kombination von der gezeigten Meß-Position A in die Meß-Position B gebracht, um dort ebenfalls sofort ein Meßergebnis zu erhalten. Die Sensor-Kombination in Meß-Position B ist mit Bezugszeichen 24' gekennzeichnet. - Natürlich ist es auch möglich, die Sensor-Kombination an ihrer Position zu belassen und stattdessen die Sende-Kombination (14,16,18) entlang der Welle oder eines zu vermessenden zylindrischen Gegenstandes zu verschieben.

In einer anderen, besonders vorteilhaften Ausgestaltung der Erfindung ist es darüberhinaus möglich, mit zwei identisch aufgebauten Sende- und Empfangskombinationen zu arbeiten. Solche sind z. B. in Blickrichtung des Laser- oder Lichtstrahls rechtsseitig mit einem Lichtsender ausgestattet, während an der linken Seite des Prismas ein Sensor angebracht ist. Wie im vorhergehenden erläutert, müssen die Sensoren auch hier in der Lage sein, den Auftrefffpunkt eines Lichtstrahles nach zwei kartesischen Koordinaten zu ermitteln und zusätzlich auch die Einfallsrichtung des Lichtstrahles korrekt zu identifizieren. Zu diesem Zweck können in weiteren Ausgestaltungen der Erfindung Strahlengänge vorgesehen sein, die von der in Fig. 1 gezeigten Version abweichen, aber an sich bekannt sind.

Insgesamt ermöglicht die Erfindung, die Geradheit von zylindrischen Gegenständen entlang lokaler Achsabschnitte zu vermessen. Der Vorteil der erfindungsgemäßen Apparatur und des zugehörigen Meßverfahrens besteht darin, daß - sofort nach Positionierung des Meßgerätes über interessierenden Achsabschnitten - ein gesuchtes Meßergebnis hinsichtlich Parallelversatz und Winkelversatz dieser Achsabschnitte zueinander dargestellt werden kann.

## Patentansprüche

1. Messgerät zur Bestimmung der Geradheit von Wellen, Wellentunneln, oder Rohren, bestehend aus
- einem ersten Adapter auf Basis eines mechanischen Prismas, welcher auf eine Welle oder eine zylindrische Oberfläche aufsetzbar ist und je eine Vorrichtung zum Aussenden und zum Empfang und Detektion der Lage und EinNisrichtung mindestens eines Lichtstrahles definierten Querschnittes aufweist, und
- einem zweiten Adapter auf Basis eines mechanischen Prismas, welcher auf eine Welle oder eine zylindrische Oberfläche in wahifreiem Abstand neben dem ersten Adapter aufsetzbar ist und mindestens je eine andere Vorrichtung zum Aussenden und zum Empfang und Detektion der Lage und Einfallsrichtung eines Lichtstrahles definierten Querschnittes aufweist
- einer mit den genannten Vorrichtungen zum Empfang und Detektion von Lichtstrahlen in Wirkverbindung stehender Elektronik, welche geeignet ist, sowohl den translatorischen Parallelversatz als auch den Winkelversatz der beiden genannten Adapter relativ zueinander nach je zwei Freiheitsgeraden quantitativ zu bestimmen.

2. Verwendung des Meßgerätes nach Anspruch 1 bei der Erfassung metrologischer Daten von Wellen oder Oberflächen an Werkzeugmaschinen.

3. Verwendung des Meßgerätes nach Anspruch 1 bei der Erfassung metrologischer Daten an Rohren, insbesondere Rohren in Form von Pipelines.
